(19) Europäisches Patentamt
European Patent Office
Office européen des brevets

(11) EP 4 448 643 B1

(12) **FASCICULE DE BREVET EUROPEEN**

(45) Date de publication et mention de la délivrance du brevet:
**04.02.2026 Bulletin 2026/06**

(21) Numéro de dépôt: **22834518.7**

(22) Date de dépôt: **07.12.2022**

(51) Classification Internationale des Brevets (IPC):
***C08L 9/00*** *(2006.01)* ***C08K 3/04*** *(2006.01)*
***C08L 23/08*** *(2025.01)*

(52) Classification Coopérative des Brevets (CPC):
(C-Sets disponibles)
**C08L 9/00; C08K 3/04; C08K 3/36; C08K 5/103;**
C08K 5/0016 (Cont.)

(86) Numéro de dépôt international:
**PCT/EP2022/084723**

(87) Numéro de publication internationale:
**WO 2023/110566 (22.06.2023 Gazette 2023/25)**

(54) **COMPOSITION DE CAOUTCHOUC COMPRENANT UN PLASTIFIANT POLAIRE D'ESTER ET UN ELASTOMERE FORTEMENT SATURE**

KAUTSCHUKZUSAMMENSETZUNG ENTHALTEND EINEN POLAREN ESTER-WEICHMACHER UND EIN STARK GESÄTTIGTES ELASTOMER

RUBBER COMPOSITION CONTAINING A POLAR ESTER PLASTIFIER AND A HIGHLY SATURATED ELASTOMER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.12.2021 FR 2113472**

(43) Date de publication de la demande:
**23.10.2024 Bulletin 2024/43**

(73) Titulaire: **COMPAGNIE GENERALE DES ETABLISSEMENTS MICHELIN**
**63000 Clermont-Ferrand (FR)**

(72) Inventeurs:
- **FERRAND, Thomas**
**63040 CLERMONT-FERRAND CEDEX 09 (FR)**
- **ARAUJO DA SILVA, José-Carlos**
**63040 CLERMONT-FERRAND CEDEX 09 (FR)**
- **PRAS, Maxime**
**63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2020/011003 FR-A1- 3 118 047**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08K 3/04, C08L 9/00;**
**C08K 3/36, C08L 9/00;**
**C08K 5/103, C08L 9/00**

## Description

Le domaine de la présente invention est celui des compositions de caoutchouc comportant un élastomère diénique fortement saturé, en particulier des compositions destinées à être utilisées dans un pneumatique.

Les compositions de caoutchouc diénique traditionnellement utilisées dans le pneumatique sont des compositions de caoutchouc renforcées par des élastomères diéniques fortement insaturés comme les polybutadiènes, les polyisoprènes, les copolymères de butadiène et de styrène. Il a été proposé, notamment dans le document WO 2014/114607 A1, d'utiliser des copolymères d'éthylène et de 1,3-butadiène dans des compositions de caoutchouc pour pneumatique. Les compositions de caoutchouc renforcées de copolymère d'éthylène et de 1,3-butadiène sont notamment décrites pour améliorer le compromis de performances d'un pneumatique que sont la résistance à l'usure et la résistance au roulement. Ces compositions de caoutchouc diénique une fois réticulées présentent une rigidité bien plus élevée que les compositions de caoutchouc diénique traditionnellement utilisées et peuvent donc parfois s'avérer inappropriées pour certaines applications.

Il existe donc un besoin de diminuer la rigidité à cuit de telles compositions comprenant un caoutchouc diénique à base d'éthylène. Pour cela, il est connu de diminuer la rigidité à cuit d'une composition de caoutchouc diénique en diminuant la densité pontale de la composition de caoutchouc. Toutefois, cette solution s'accompagne d'une augmentation de l'hystérèse de la composition de caoutchouc ce qui est préjudiciable pour la résistance au roulement. Le document WO 2021/053296 A1 a répondu au besoin précité en fournissant des compositions de caoutchouc qui comprend un copolymère d'éthylène et d'un 1,3-diène de formule CH=CR-CH=CH, le symbole R représentant une chaîne hydrocarbonée ayant 3 à 20 atomes de carbone.

Toutefois, il demeure toujours intéressant d'améliorer davantage la résistance au roulement, de préférence sans diminuer davantage la rigidité de la composition.

Poursuivant ses recherches, la Demanderesse a découvert que l'utilisation d'un plastifiant liquide spécifique associé au copolymère contenant des unités éthylène et des unités 1,3-diène de formule CH=CR-CH=CH, le symbole R représentant une chaîne hydrocarbonée ayant 3 à 20 atomes de carbone, permet d'améliorer la résistance au roulement, et ce, sans impacter ou sans trop impacter la rigidité de la composition, mais également sans impacter l'adhérence sur sol mouillé de la composition.

Ainsi un premier objet de l'invention est une composition de caoutchouc à base d'au moins :

- 50 à 100 pce d'au moins un copolymère contenant des unités éthylène et des unités d'un 1,3-diène de formule (I), les unités éthylène dans le copolymère représentant entre 50% et 95% en mole des unités monomères du copolymère,

$$CH_2{=}CR{-}CH{=}CH_2 \qquad (I)$$

  le symbole R représentant une chaîne hydrocarbonée ayant 3 à 20 atomes de carbone ;
- 0 à 50 pce d'au moins un élastomère diénique ayant un taux molaire d'unité diénique supérieur à 50% ;
- un plastifiant dialkylester de diacide aliphatique ;
- une charge renforçante ; et
- un système de réticulation.

L'invention a également pour objet un article en caoutchouc comprenant une composition selon l'invention, en particulier un bandage pneumatique ou non-pneumatique dont la bande de roulement comprend une composition selon l'invention.

## I- DÉFINITIONS

Par l'expression « à base de » utilisée pour définir les constituants d'un système catalytique, on entend le mélange de ces constituants, ou le produit de la réaction d'une partie ou de la totalité de ces constituants entre eux.

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par « matrice élastomère », on entend l'ensemble des élastomères de la composition, y compris le copolymère défini ci-dessous.

Sauf indication contraire, les taux des unités résultant de l'insertion d'un monomère dans un copolymère sont exprimés en pourcentage molaire par rapport à la totalité des unités monomères du copolymère.

Par l'expression « partie en poids pour cent parties en poids d'élastomère » (ou pce), il faut entendre au sens de la présente invention, la partie, en masse pour cent parties en masse de la matrice élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".
Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.
Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-1 Matrice élastomère

La composition selon l'invention est à base d'au moins :

- 50 à 100 pce d'au moins un copolymère contenant des unités éthylène et des unités d'un 1,3-diène de formule (I), les unités éthylène dans le copolymère représentant entre 50% et 95% en mole des unités monomères du copolymère,

$$CH_2=CR-CH=CH_2 \qquad (I)$$

  le symbole R représentant une chaîne hydrocarbonée ayant 3 à 20 atomes de carbone ;
- 0 à 50 pce d'au moins un élastomère diénique ayant un taux molaire d'unité diénique supérieur à 50%.

Dans la présente, sauf indication contraire, l'expression « le copolymère » désigne « l'au moins un copolymère contenant des unités éthylène et des unités d'un 1,3-diène de formule (I), les unités éthylène dans le copolymère représentant entre 50% et 95% en mole des unités, $CH_2=CR-CH=CH_2$ (I), le symbole R représentant une chaîne hydrocarbonée ayant 3 à 20 atomes de carbone » pour un souci de simplification de rédaction.
Par ailleurs, sauf indication contraire, les taux des unités résultant de l'insertion d'un monomère dans un copolymère sont exprimés en pourcentage molaire par rapport à la totalité des unités monomères du copolymère.
Le 1,3-diène de formule (I) est un 1,3 diène substitué, qui peut donner lieu à des unités de configuration 1,2 représentée par la formule (1), de configuration 3,4 représentée par la formule (2) et de configuration 1,4 dont la forme trans est représentée ci-après par la formule (3).

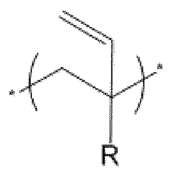

(1)

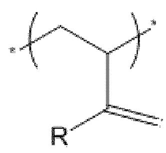

(2)

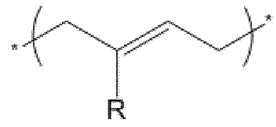

(3)

Comme cela est également bien connu, l'unité éthylène est une unité de motif « $-(CH_2-CH_2)-$ ».
Le copolymère utile aux besoins de l'invention est un copolymère contenant des unités d'éthylène et du 1,3-diène de formule (I), ce qui implique que des unités monomères du copolymère sont des unités résultant de la polymérisation de l'éthylène et du 1,3-diène de formule (I). Le copolymère comprend donc des unités éthylène et des unités du 1,3-diène de formule (I). Selon l'invention, le 1,3-diène peut être un seul composé, c'est-à-dire un seul (en anglais « one ») 1,3-diène de formule (I) ou être un mélange de 1,3-diènes de formule (I), les 1,3-diènes du mélange se différenciant les uns des autres par le groupe représenté par le symbole R.
Le copolymère utile aux besoins de l'invention est avantageusement un copolymère statistique selon l'un quelconque des modes de réalisation de l'invention. Très avantageusement, le copolymère est un polymère atactique selon l'un quelconque des modes de réalisation de l'invention.
Dans la formule (I) du 1,3-diène, la chaîne hydrocarbonée représentée par le symbole R est une chaîne insaturée

de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. De préférence encore, le symbole R représente une chaîne hydrocarbonée acyclique insaturée et ramifiée. Ainsi, la chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène, le β-farnésène ou un mélange de myrcène et de β-farnésène. Encore plus avantageusement, le 1,3-diène est le myrcène.

Avantageusement, le copolymère contient des unités du 1,3-diène de formule (I) qui représentent entre 1% et 50%, de préférence entre 1% et 30%, de préférence entre 5% et 30%, en moles des unités monomères du copolymère.

Avantageusement également, le copolymère contient des unités éthylène qui représentent de 60% à 90% en moles des unités monomères du copolymère, c'est-à-dire de 60% à 90% en moles des unités éthylène et des unités 1,3-diène. De manière très préférentielle, le copolymère contient des unités éthylène qui représentent de 70% à 85% en moles, des unités monomères du copolymère.

Le copolymère peut comprendre un deuxième 1,3-diène choisi parmi le 1,3-butadiène, l'isoprène ou leur mélange. Dans ce cas, le copolymère est un copolymère d'éthylène, d'un 1,3-diène de formule (I) et d'un deuxième 1,3-diène choisi parmi le 1,3-butadiène, l'isoprène ou leur mélange, les unités monomères du copolymère sont des unités résultant de la polymérisation de l'éthylène, du 1,3-diène de formule (I) et du deuxième 1,3-diène. Le copolymère peut ainsi comprendre des unités éthylène, des unités du 1,3-diène de formule (I) et des unités du deuxième 1,3-diène. Avantageusement, le deuxième 1,3-diène du copolymère est le 1,3-butadiène.

Avantageusement, le copolymère contient des unités du deuxième 1,3-diène qui représentent entre 1% et 49%, de préférence entre 4% et 29%, de préférence entre 4% et 25%, en moles des unités monomères du copolymère.

Selon un mode de réalisation de l'invention, le copolymère contient plus de 60% à 90% en mole d'unités éthylène et au plus 20% en mole, préférentiellement au plus 15% en mole d'unités du 1,3-diène de formule (I). Selon ce mode de réalisation de l'invention, le copolymère contient préférentiellement moins de 30% en mole d'unités du deuxième 1,3-diène ou contient préférentiellement moins de 20% en mole d'unités du deuxième 1,3-diène.

Selon un mode de réalisation particulier de l'invention, en particulier lorsque le deuxième 1,3-diène est le 1,3-butadiène ou un mélange de 1,3-butadiène et d'isoprène, le copolymère contient en outre des unités de motif 1,2-cyclohexanediyle. La présence de ces structures cycliques dans le copolymère résulte d'une insertion très particulière de l'éthylène et de 1,3-butadiène lors de la polymérisation. La teneur en unités de motif 1,2-cyclohexanediyle dans le copolymère varie selon les teneurs respectives en éthylène et en 1,3-butadiène dans le copolymère. Le copolymère contient de préférence moins de 15% en mole d'unités de motif 1,2-cyclohexanediyle.

De préférence, le copolymère présente une température transition de vitreuse inférieure à - 35°C, de préférence comprise entre -90°C et -35°C, de préférence encore entre -70°C et - 35°C.

Le copolymère peut être préparé par un procédé qui comprend la copolymérisation d'éthylène, du 1,3-diène de formule (I) et de l'éventuel deuxième 1,3-diène, en présence d'un système catalytique à base au moins d'un métallocène de formule (II) et d'un organomagnésien de formule (III)

$$P(Cp^1Cp^2)\ Nd(BH_4)_{(1+y)}\text{-}L_y\text{-}N_x \qquad \text{(II)}$$

$$MgR^1R^2 \qquad \text{(III)}$$

dans lesquels :

- $Cp^1$ et $Cp^2$, identiques ou différents, étant choisis dans le groupe constitué par le groupe cyclopentadiényle de formule $C_5H_4$ , le groupe fluorényle non substitué de formule $C_{13}H_8$ et les groupes fluorényles substitués,
- P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- $R^1$ et $R^2$, identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

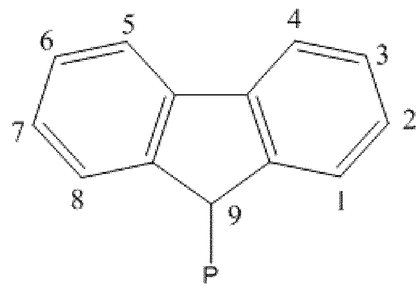

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule (I), en particulier le myrcène ou le β-farnésène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sousproduits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule $MgR^1R^2$ dans laquelle $R^1$ et $R^2$, identiques ou différents, représentent un groupe carboné. On entend par groupe carboné un groupe qui contient un ou plusieurs atomes de carbone. De préférence, $R^1$ et $R^2$ contiennent 2 à 10 atomes de carbone. De manière plus préférentielle, $R^1$ et $R^2$ représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle $Cp^1$ et $Cp^2$, identiques ou différents, sont choisis dans le groupe constitué par les groupes fluorényles substitués et le groupe fluorényle non substitué de formule $C_{13}H_8$. Pour cette variante, conviennent en particulier les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlu_2Nd(\mu\text{-}BH_4)_2Li(THF)]$ ; $[Me_2SiFlu_2Nd(\mu\text{-}BH_4)(THF)]$ ; $[\{Me_2SiFlu_2Nd(\mu\text{-}BH_4)(THF)\}_2]$ ; $[Me_2SiFlu_2Nd(\mu\text{-}BH_4)]$.

L'homme du métier sait adapter aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène, du 1,3-diène de formule (I) et de l'éventuel deuxième 1,3-diène, dans un réacteur de polymérisation, un ajout continu d'éthylène et du 1,3-diène de formule (I) et de l'éventuel deuxième 1,3-diène, peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Le taux du copolymère est avantageusement compris dans un domaine allant de 50 à 100 pce, de préférence de 75 à 100 pce, de préférence encore de 90 à 100 pce. Le taux du copolymère peut avantageusement être de 100 pce, c'est-à-dire que la matrice élastomère de la composition ne comprend pas d'autre élastomère que le copolymère contenant des unités éthylène et des unités du 1,3-diène de formule (I) et éventuellement des unité du deuxième 1,3-diène. Il est entendu que le copolymère peut être constitué par un mélange de copolymères qui se différencient par leur microstructure ou par leur macrostructure. Par ailleurs, le taux de l'élastomère diénique ayant un taux molaire d'unité diénique supérieur à 50% dans la composition selon l'invention peut être compris dans un domaine allant de 0 à 50 pce, de préférence de 0 à 25 pce, de préférence encore de 0 à 10 pce.

Alternativement, le taux du copolymère dans la composition peut être compris dans un domaine allant de 50 à 95 pce, ce préférence de 65 à 90 pce, de préférence de 70 à 85 pce, et le taux de l'élastomère diénique ayant un taux molaire d'unité diénique supérieur à 50% dans la composition peut être compris dans un domaine allant de 5 à 50 pce, de préférence de 10 à 35 pce, de préférence de 15 à 30 pce.

On entend par unité diénique une unité monomère issue de l'insertion d'un motif monomère résultant de la polymérisation d'un monomère diène conjugué ou d'un monomère diène non conjugué, l'unité diénique comportant une double liaison carbone-carbone.

Avantageusement, l'élastomère diénique ayant un taux v d'unité diénique supérieur à 50% de la composition selon l'invention est choisi dans le groupe constitué par les polybutadiènes (BR), le caoutchouc naturel (NR), les polyisoprènes de synthèse (IR), les copolymères de 1,3-butadiène, les copolymères d'isoprène, et les mélanges de ces élastomères.

De préférence, l'élastomère diénique ayant un taux molaire d'unité diénique supérieur à 50% de la composition selon l'invention est choisi dans le groupe constitué par les élastomères isopréniques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Avantageusement, l'élastomère isoprénique est un polyisoprène comportant un taux massique de liaisons 1,4-cis d'au moins 90%, de préférence d'au moins 98%, de la masse du polyisoprène.

De préférence, le polyisoprène est choisi dans le groupe constitué par le caoutchouc naturel, les polyisoprènes de synthèse et leurs mélanges. De préférence encore le polyisoprène est un caoutchouc naturel.

II-2 Système plastifiant

La composition de caoutchouc selon l'invention est à base d'au moins un plastifiant dialkylester de diacide aliphatique.

De préférence, le plastifiant dialkylester de diacide aliphatique est un composé de formule ROOC-$(CH_2)_n$-COOR dans lequel R est un alkyle linéaire ou branché et n représente un nombre entier de 4 à 20.

De préférence, le radical R est un alkyle comprenant de 4 à 20 atomes de carbone, de préférence de 6 à 12 atomes de carbone et plus préférentiellement de 6 à 10 atomes de carbone.

De préférence, le radical R est un alkyle ramifié, et de façon très préférentielle, R est un radical 2-éthylexyl ou isooctyle, de préférence 2-éthylexyl.

De préférence pour les besoins de l'invention, n représente un entier de 4 à 12, et de préférence un entier de 6 à 10. De façon très préférée, n'est égal à 8.

De façon très préférentielle, le plastifiant dialkylester de diacide aliphatique est le di-2-éthylexyl sébacate (ou diisooctyle sébacate) [Chem 1] ci-dessous.

[Chem 1]

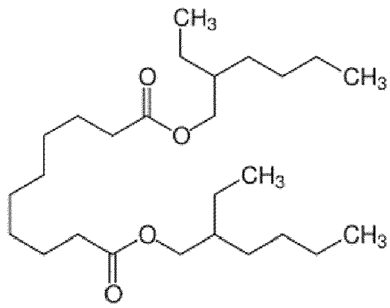

Le di-2- éthylexyl sébacate, de numéro CAS 122-62-3, présente une température de transition vitreuse de -104°C et il est par exemple commercialisé sous la dénomination « Plasthall DOS » par la société Hallstar.

Bien entendu, le plastifiant dialkylester de diacide aliphatique peut être un mélange de plusieurs plastifiants dialkylester de diacide aliphatique.

De préférence pour les besoins de l'invention, le taux de plastifiant dialkylester de diacide aliphatique dans la composition est compris dans un domaine allant de 1 à 50 pce, de préférence de 2 à 40 pce et plus préférentiellement de 3 à 30 pce. De façon très préférentielle, le taux de plastifiant dialkylester de diacide aliphatique est compris dans un domaine allant de 5 à 15 pce.

En outre, la composition selon l'invention ne comprend avantageusement pas de plastifiant liquide autre que le plastifiant dialkylester de diacide aliphatique, ou en contient moins de 15 pce, de préférence moins de 10 pce, de préférence moins de 5 pce. Par définition, un plastifiant liquide est liquide à température ambiante (20°C, 1 atm).

La composition selon l'invention peut comprendre une résine hydrocarbonée dont la Tg est supérieure à 20°C, qui est par définition un solide à température et pression ambiante (20°C, 1 atm).

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles *(i.e.,* compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées.

Le point de ramollissement des résines hydrocarbonées est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 μm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alphaméthylstyrène, l'indène, l'ortho-, méta-, para-méthylstyrène, le vinyle-toluène, le paratertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

De préférence, la résine plastifiante hydrocarbonée de haute Tg présente au moins une quelconque des caractéristiques suivantes :

- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de haute Tg présente l'ensemble des caractéristiques préférentielles ci-dessus.

Les résines hydrocarbonées de haute Tg préférentielles ci-dessus sont bien connues de l'homme du métier et disponibles commercialement, par exemple les résines polylimonène commercialisées par la société DRT sous la dénomination "Dercolyte L120" (Mn=625 g/mol ; Mw=1010 g/mol ; Ip=1,6 ; Tg=72°C), ou par la société ARIZONA sous la dénomination "Sylvagum TR7125C" (Mn=630 g/mol ; Mw=950 g/mol ; Ip=1,5 ; Tg=70°C) ; les résines de copolymère coupe C5/ vinylaromatique, notamment coupe C5/ styrène ou coupe C5/ coupe C9 commercialisées par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", ou par Exxon sous dénominations "Escorez 2101" et "Escorez 1273" ; et les résines de copolymère limonène/ styrène commercialisées par DRT sous dénomination "Dercolyte TS 105", ou par ARIZONA Chemical Company sous dénominations "ZT115LT" et "ZT5100".

Lorsqu'elle est incluse dans la composition, le taux de résine plastifiante hydrocarbonée de Tg supérieure à 20°C est compris dans un domaine allant de 1 à 70 pce, de préférence de 5 à 60 pce, de préférence de 10 à 50 pce.

II-3 Charge renforçante

La composition selon l'invention est à base d'au moins une charge renforçante. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre du noir de carbone, de la silice ou un de leurs mélanges. Avantageusement, la charge renforçante de la composition selon l'invention comprend plus de 50% en masse de silice par rapport à la masse totale de charge renforçante.

Le taux de charge renforçante est ajusté par l'homme du métier en fonction de l'usage de la composition de caoutchouc. Avantageusement, le taux de charge renforçante, dans la composition selon l'invention, est compris dans un domaine allant de 30 à 200 pce, de préférence de 40 à 190 pce, de préférence de 50 à 180 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange-maître (« masterbatch » en anglais) (voir par exemple demandes WO97/36724-A2 ou WO99/16600-A1).

Comme silices conviennent tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non

HDS, les silices commerciales suivantes peuvent être utilisées : les silices « Ultrasil® VN2GR », « Ultrasil® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Lorsque de la silice est utilisée, la teneur en agent de couplage dans la composition de l'invention peut aisément être ajustée par l'homme du métier. Typiquement le taux d'agent de couplage représente de 0,5% à 15% en poids par rapport à la quantité de silice.

II-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

II-5 Additifs possibles

La composition utile aux besoins de l'invention peut comporter également tout ou partie des additifs usuels habituellement utilisés dans les compositions d'élastomères destinées à être utilisées dans un pneumatique, comme par exemple des agents de mise en œuvre, des pigments, des agents de protection tels que cires anti-ozone, anti-ozonants chimiques, antioxydants, anti-fatigue. Avantageusement, la composition selon l'invention ne comprend pas de résine renforçante, telle que décrite par exemple dans la demande WO 02/10269 A2.

II-6 Préparation des compositions de caoutchouc

Les compositions utilisables dans le cadre de la présente invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite

en une seule étape thermomécanique au cours de laquelle on introduit, dans un mélangeur approprié tel qu'un mélangeur interne usuel (par exemple de type « Banbury »), tous les constituants nécessaires, notamment la matrice élastomère, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.

- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

Les compositions peuvent être soit à l'état cru (avant réticulation ou vulcanisation), soit à l'état cuit (après réticulation ou vulcanisation). Elles peuvent être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

<u>II-7 Article en caoutchouc</u>

La présente invention a également pour objet un article de caoutchouc comprenant au moins une composition selon l'invention. L'article de caoutchouc peut être choisi dans le groupe constitué par les bandages pneumatiques, les bandages non pneumatiques, les chenilles, les bandes convoyage, les courroies et les articles antivibratoires. De préférence, l'article de caoutchouc est choisi dans le groupe constitué par les bandages pneumatiques, les bandages non pneumatiques et les bandes de convoyage. De préférence encore, l'article de caoutchouc est un bandage pneumatique ou non-pneumatique.

Plus particulièrement, l'invention a également pour objet un bandage pneumatique ou non pneumatique pourvu d'une bande de roulement comprenant une composition selon l'invention. De préférence, la composition selon l'invention constitue une partie ou la totalité de la bande de roulement du pneumatique.

Le pneumatique selon l'invention peut être destiné à équiper tout type de véhicules, en particulier des véhicules à moteur, sans limitation particulière.

## III- EXEMPLES

<u>III-1 Mesures et tests utilisés</u>

*<u>III-1.1 Détermination de la microstructure des élastomères</u>* :

a) Détermination de la microstructure des copolymères Ethylène-Myrcène (Elastomère E1) :

La caractérisation spectrale et les mesures de la microstructure des copolymères Ethylène-Myrcène sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de

basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25°C.

Préparation de l'échantillon : 25 mg d'échantillon sont solubilisés dans 1 mL de chloroforme deutéré ($CDCl_3$).

Calibration de l'échantillon : Les axes des déplacements chimiques $^1H$ et $^{13}C$ sont calibrés par rapport à l'impureté protonée du solvant ($CHCl_3$) à $\delta_{1H}$ = 7,2 ppm (pour le signal le plus déblindé) et $\delta_{13C}$ = 77 ppm (pour le signal le moins déblindé).

Attribution spectrale pour les copolymères d'éthylène et du 1,3-myrcène : Dans les représentations A, B, C ci-dessous, les symboles R1 et R2 représentent les points de rattachement de l'unité à la chaîne polymère. Les signaux des formes d'insertion du 1,3-diène A, B et C ont été observés sur les différents spectres enregistrés. D'après S. Georges et al., (Polymer 55 (2014) 3869-3878), le signal du groupement -CH= n°8" caractéristique de la forme C présente des déplacements chimiques $^1H$ et $^{13}C$ identiques au groupement - CH= n°3. Les déplacements chimiques des signaux caractéristiques des motifs A, B et C sont présentés dans le Tableau 1. Les motifs A, B et C correspondent respectivement aux unités de configuration 3,4, de configuration 1,2 et de configuration 1,4-trans. Les quantifications ont été effectuées à partir de l'intégration des spectres RMN 1D $^1H$ à l'aide du logiciel Topspin. Les signaux intégrés pour la quantification des différents motifs sont :

Ethylène : signal à 1,2 ppm correspondant à 4 protons
Myrcène total : signal n°1 (1,59 ppm) correspondant à 6 protons
Forme A : signal n°7 (4,67 ppm) correspondant à 2 protons
Forme B : signal n°8' (5,54 ppm) correspondant à 1 proton

La quantification de la microstructure est réalisée en pourcentage molaire (%molaire) comme suit : %molaire d'un motif = intégrale 1H d'un motif * 100 / Σ (intégrales 1H de chaque motif).

[Tableau 1]

| δ1H (ppm) | δ13C (ppm) | Groupement |
|---|---|---|
| 5.54 | 146.4 | 8' |
| 5.07 | 124.6 | 3 + 8" |
| 4.97 - 4.79 | 112.0 | 9' |
| 4.64 | 108.5 | 7 |
| 2.03 | 26.5 | 4 |
| 2.0 - 1.79 | 31.8 | 5 + 5' + 5" |
| | 44.5 | 8 |
| 1.59 | 25.9 et 17.0 | 1 |
| 1.2 | 36.8 - 24.0 | $CH_2$ éthylène |

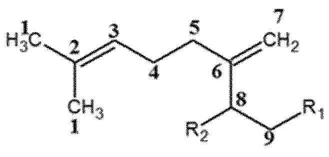
A

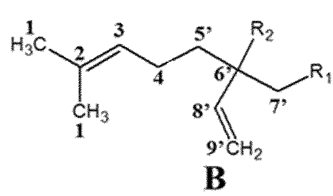
B

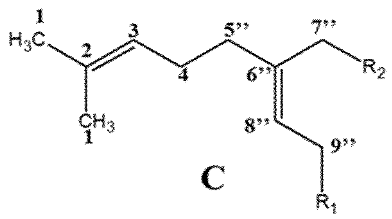
C

b) Détermination de la microstructure des terpolymères Ethylène-Butadiène-Myrcène (Elastomère E2) :

La caractérisation spectrale et les mesures de la microstructure de copolymère Ethylène-Butadiène-Myrcène sont réalisées par spectroscopie de Résonance Magnétique Nucléaire (RMN).

Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences

sont réalisées à 25 °C. 25 mg d'échantillon sont solubilisés dans 1 mL d'orthodichlorobenzène deutéré (ODCB). Les axes des déplacements chimiques 1H et 13C sont calibrés par rapport à l'impureté protonée du solvant à δ1H = 7,2 ppm (pour le signal le plus déblindé) et δ13C = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaîne polymère :

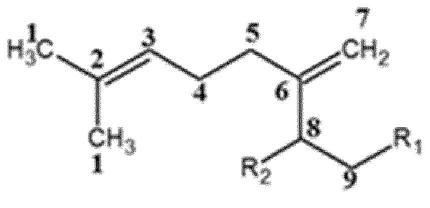

A

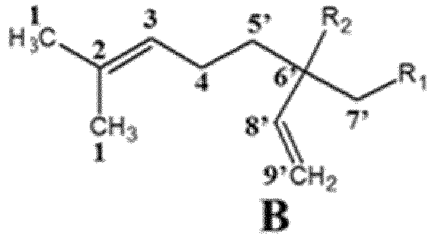

B

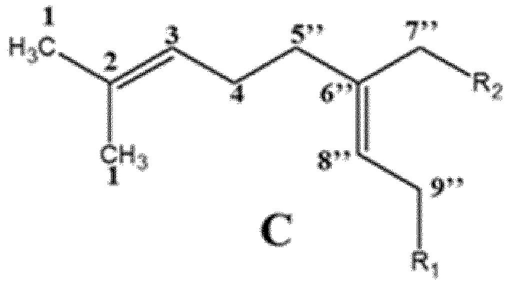

C

Le motif 1,2-cyclohexanediyle est de structure suivante :

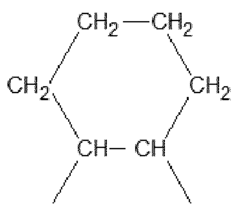

Les signaux des formes d'insertion du myrcène A ont été observés sur les différents spectres enregistrés. D'après S. Georges *et al.* (S.Georges, M.Bria, P. Zinck and M. Visseaux. Polymer 55 (2014) 3869-3878), le signal du groupement -CH= n°8" caractéristique de la forme C présente des déplacements chimiques $^{1}H$ et $^{13}C$ identiques au groupement -CH= n°3.

Les déplacements chimiques des signaux caractéristiques du polymère sont présentés dans le Tableau 2 (Attribution des signaux $^{1}H$ et $^{13}C$ des terpolymères Ethylène-Butadiène-Myrcène autres que ceux des unités du 1,3-butadiène).

[Tableau 2]

| δ1H (ppm) | δ13C (ppm) | Groupement |
|---|---|---|
| 5.19 | 125.1 | 3 + 8" |
| 4.86 | 109.0 | 7 |
| 1.59 et 1.68 | 247 et 17.6 | 1 |
| 1.3 | 37.5 - 24.0 | $CH_2$ éthylène |

Les quantifications ont été effectuées à partir de l'intégration des spectres RMN 1D $^{1}H$ à l'aide du logiciel Topspin.

Les signaux intégrés pour la quantification des différents motifs sont :

Ethylène : Totalité des signaux entre 0.5 ppm et 3.0 ppm en soustrayant les contributions aliphatiques des autres

motifs du terpolymère. Le calcul correspond à 4 protons du motif Ethylène.
Forme A : signal n°7 (4.86 ppm) correspondant à 2 protons.
La proportion de forme C n'est pas accessible directement mais peut être calculée à partir du signal n°3+8" en soustrayant la contribution de la forme A.
PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.

La quantification de la microstructure est réalisée en pourcentage molaire (% molaire) comme suit :

$$\% \text{ molaire d'un motif} = \text{intégrale } ^1\text{H d'un motif} * 100 / \Sigma\ (\text{intégrale } ^1\text{H de chaque motif}).$$

*III-1.2 Détermination de la température de transition vitreuse des polymères :*

La température de transition vitreuse est mesurée au moyen d'un calorimètre différentiel ("Differential Scanning Calorimeter") selon la norme ASTM D3418 (1999).

*III-1.3 Détermination de la macrostructure des polymères par chromatographie d'exclusion stérique (SEC) :*

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45$\mu$m avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min$^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 $\mu$L. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

*Propriétés dynamiques*

Les propriétés dynamiques G*(10%) et tan(δ)max sont mesurées à une température de 23°C sur un viscoanalyseur (Metravib VA4000), selon la norme ASTM D 5992-96. On a enregistré la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10Hz, dans les conditions définies de température par exemple à 23°C selon la norme ASTM D 1349-99. On effectue un balayage en amplitude de déformation de 0,1 à 50% (cycle aller), puis de 50% à 0,1% (cycle retour). Les résultats exploités sont le module complexe de cisaillement dynamique G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 23°C.

On rappelle que, de manière bien connue de l'homme du métier, la valeur de tan(δ)max à 23°C est représentative de l'hystérèse et la valeur de G* à 23°C est représentative de la rigidité du matériau. Les résultats de performance tan(δ) max à 23°C et G* à 23°C sont exprimés en base 100, la valeur 100 étant attribuée au témoin. Pour tan(δ)max à 23°C un résultat supérieur à 100 indique que la composition de l'exemple considéré est moins hystérétique à 23°C, traduisant une moindre résistance au roulement de la bande de roulement comportant une telle composition. Pour G* à 23°C un résultat supérieur à 100 indique que la composition de l'exemple considéré est plus rigide, traduisant une amélioration du comportement routier.

Par ailleurs, la propriété d'intégrale de la valeur tan(δ) observée de -30°C à 0°C (Int. tan(δ) [-30°C ; 0°C]) a été mesurée sur une viscoanalyseur (Metravib VA4000) selon la norme ASTM D5992-96. On a enregistré la réponse d'un échantillon de composition réticulé (éprouvette cylindrique d'épaisseur 4 mm et de section 400 m2), soumis à une simple contrainte de cisaillement sinusoïdale alternative, à une fréquence de 10 Hz, lors d'un balayage en température, sous une contrainte stationnaire de 0,25MPa.

On rappelle que, de manière bien connue de l'homme du métier, l'intégrale de la valeur tan(δ) observée de -30°C à 0°C est représentative de l'adhérence sur sol mouillé. Les résultats de performance Int. tan(δ) [-30°C ; 0°C] et G* à 23°C sont exprimés en base 100, la valeur 100 étant attribuée au témoin. Pour Int. tan(δ) [-30°C ; 0°C], un résultat supérieur à 100 indique que la composition présente une meilleur adhérence sur sol mouillé.

Le compromis de performance entre la résistance au roulement, le comportement routier et l'adhérence sur sol mouillé peut être considéré comme étant la moyenne arithmétique des résultats présentés en base 100.

<u>III-2 Synthèse des</u> polymères :

Dans la synthèse de polymères, tous les réactifs sont obtenus commercialement exceptés les métallocènes. Le butyloctylmagnésium BOMAG (20% dans l'heptane, C = 0,88 $mol.L^{-1}$) provient de Chemtura et est stocké dans un tube de Schlenk sous atmosphère inerte. L'éthylène, de qualité N35, provient de la société Air Liquide et est utilisé sans purification préalable. Le myrcène (pureté ≥ 95%) sont obtenus chez Sigma-Aldrich.

Les polymères suivants sont synthétisés selon le mode opératoire décrit ci-après :

- copolymère d'éthylène et de myrcène : élastomère E1
- copolymère d'éthylène, de butadiène et de myrcène : élastomère E2

Dans un réacteur contenant à 80°C du méthylcyclohexane, ainsi que de l'éthylène (Et) et du butadiène (Bd) et/ou du myrcène (Myr) dans les proportions indiquées dans le Tableau 4, on ajoute du butyloctylmagnésium (BOMAG) pour neutraliser les impuretés du réacteur, puis le système catalytique (voir Tableau 3). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène (Bd) et/ou myrcène (Myr) dans les proportions définies dans le Tableau 4. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le $[Me_2SiFlu_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le Tableau 3. Il est préparé selon une méthode de préparation conforme au paragraphe II.1 de la demande de brevet WO 2017/093654 A1.

La microstructure des élastomères E1 et E2 et leurs propriétés figurent dans les Tableaux 4. Pour la microstructure, la Tableau 4 indique les taux molaires des unités éthylène (Eth), des unités du 1,3-butadiène, des motifs 1,2-cyclohexanediyle (cycle), des unités myrcène. Y figure également la proportion molaire des unités myrcène selon qu'elles sont de configuration 1,4, de configuration 1,2 et 3,4.

[Tableau 3]

| Synthèse | E1 | E2 |
|---|---|---|
| Concentration métallocène (mmol/L) | 0,09 | 0,09 |
| Concentration agent alkylant (mmol/L) | 0,17 | 0,23 |
| Ratio molaire monomère préformation/ métal Nd | 90 | 90 |
| Composition de l'alimentation | 60/40 | - |
| (%mol Et/Myr) | | |
| Composition de l'alimentation (%mol Eth/Bd/Myr) | - | 69/8/23 |

[Tableau 4]

| Elastomère | E1 | E2 |
|---|---|---|
| Et (%mol) | 74 | 73 |
| Bd (%mol) | - | 8 |
| 1,2-cyclohexanediyle (%mol) | - | 4 |
| Myr (%mol) | 26 | 15 |
| Myr 1,4 (%mol/ %mol Myr) | 31 | 33 |
| Myr 1,2 (%mol/ %mol Myr) | 4 | <1 |
| Myr 3,4 (%mol/ %mol Myr) | 65 | 66 |
| Tg (°C) | -59 | -55 |
| Mn (g/mol) | 367 400 | 139 800 |

III-3 Préparation des compositions de caoutchouc :

Dans les exemples qui suivent, les compositions caoutchouteuses ont été réalisées comme décrit au point II-6 ci-dessus. En particulier, la phase « non-productive » a été réalisée dans un mélangeur de 3 litres pendant 5 minutes, pour une vitesse moyenne de palettes de 50 tours par minute jusqu'à atteindre une température maximale de tombée de 160°C. La phase « productive » a été réalisée dans un outil à cylindre à 23°C pendant 10 minutes. La réticulation de la composition a été conduite à une température de 150°C, sous pression.

III-4 Essais de caoutchouterie :

Les exemples présentés ci-dessous ont pour objet de comparer le compromis de performance entre la résistance au roulement et le comportement routier de deux compositions conformes à la présente invention (C1 et C2) avec 4 composition témoin (T1 à T4). Le Tableau 5 présente les compositions testées (en pce), ainsi que les résultats obtenus.

Les compositions témoin diffèrent des compositions conformes à l'invention par la nature du plastifiant liquide utilisé.

Les résultats des compositions T2 et C1, et T4 et C2 sont présentés en base 100 respectivement par rapport à la composition T1 et T3 utilisant de l'huile de tournesol qui est un plastifiant liquide couramment utilisé dans les compositions de caoutchouc pour pneumatique.

[Tableau 5]

| Compositions | T1 | T2 | C1 | T3 | T4 | C2 |
|---|---|---|---|---|---|---|
| Elastomère E1(1) | 100 | 100 | 100 | | | |
| Elastomère E2(1) | | | | 100 | 100 | 100 |
| Silice(2) | 94 | 94 | 94 | 94 | 94 | 94 |
| Agent de couplage(3) | 8 | 8 | 8 | 8 | 8 | 8 |

(suite)

| Compositions | T1 | T2 | C1 | T3 | T4 | C2 |
|---|---|---|---|---|---|---|
| N330(4) | 2 | 2 | 2 | 2 | 2 | 2 |
| Plastifiant 1(5) | 15 | | | 15 | | |
| Plastifiant 2(6) | | 15 | | | 15 | |
| Plastifiant 3(7) | | | 15 | | | 15 |
| Résine(8) | 30 | 30 | 30 | 30 | 30 | 30 |
| 6-PPD(9) | 3,5 | 3,5 | 3,5 | 3,5 | 3,5 | 3,5 |
| TMQ(10) | 1,5 | 1,5 | 1,5 | 1,5 | 1,5 | 1,5 |
| Cire ozone(11) | 2 | 2 | 2 | 2 | 2 | 2 |
| DPG(12) | 2 | 2 | 2 | 2 | 2 | 2 |
| Acide stéarique(13) | 3 | 3 | 3 | 3 | 3 | 3 |
| ZnO(14) | 1 | 1 | 1 | 1 | 1 | 1 |
| Accélérateur(15) | 1 | 1 | 1 | 1 | 1 | 1 |
| Soufre | 2 | 2 | 2 | 2 | 2 | 2 |
| | | | | | | |
| Perfo tan(δ)max à 23°C | 100 | 98 | 107 | 100 | 100 | 113 |
| G* 10% à 23°C | 100 | 102 | 99 | 100 | 102 | 95 |
| Int. tan(δ) [-30°C ; 0°C] | 100 | 94 | 99 | 100 | 93 | 101 |
| Compromis | 100 | 98 | 102 | 100 | 98 | 103 |

(1) Elastomères E1 et E2 préparés selon le procédé décrit au point III-2 ci-dessus
(2) Silice « Zeosil 1165MP » commercialisée par Solvay
(3) Silane liquide triethoxysilylpropyltetrasulfure (TESPT) « Si69 » de la société Evonik
(4) Noir de carbone N234 selon la norme ASTM D-1765-2017
(5) Plastifiant 1 : Trioléate de glycérol (huile de tournesol à 85% en poids d'acide oléique) « Lubrirob Tod 1880 » de la société Novance (Tg = -90°C)
(6) Plastifiant 2 : Huile « Plasthall 100 » de la société Hallstar (Tg = -110°C)
(7) Plastifiant 3 : Huile « Plasthall DOS » de la société Hallstar (Tg = -104°C)
(8) Résine « Escorez 5000 series » de la société Exxon Mobil (Tg = 52°C)
(9) N-1,3-diméthylbutyl-N-phényl-para-phenyldiamine « Santoflex 6-PPD » de la société Flexsys
(10) 2,2,4-triméthyl-1,2-dihydroquinoline « Pilnox TMQ » de la société Nocil
(11) Cire anti-ozone « VARAZON 4959 » de la société Sasol Wax
(12) Diphénylguanidine « Perkacit DPG » de la société Flexsys
(13) Acide stéarique « Pristerene 4931 » de la société Uniqema
(14) Oxyde de Zinc de grade industriel de la société Umicore
(15) N-cyclohexyl-2-benzothiazol-sulfénamide « Santocure CBS » de la société Flexsys

Ces résultats montrent que l'utilisation d'une composition de caoutchouc comprenant la combinaison d'un copolymère contenant des unité éthylène, des unité 1,3-diène de formule (I), et d'un plastifiant dialkylester de diacide aliphatique , permet d'améliorer la résistance au roulement sans (trop) pénaliser la rigidité, ni l'adhérence sur sol mouillé, par rapport à des compositions de caoutchouc comprenant ne comprenant pas un tel plastifiant liquide. Ainsi, les compositions conformes à l'invention permettent d'améliorer la résistance au roulement, tout en améliorant le compromis global entre les trois performances que sont la résistance au roulement, la rigidité et l'adhérence sur sol mouillé.

## Revendications

**1.** Composition de caoutchouc à base d'au moins :

- 50 à 100 pce d'au moins un copolymère contenant des unités éthylène et des unités d'un 1,3-diène de formule (I), les unités éthylène dans le copolymère représentant entre 50% et 95% en mole des unités monomères du copolymère,

$$CH_2=CR-CH=CH_2 \qquad (I)$$

le symbole R représentant une chaîne hydrocarbonée ayant 3 à 20 atomes de carbone ;
- 0 à 50 pce d'au moins un élastomère diénique ayant un taux molaire d'unité diénique supérieur à 50% ;
- un plastifiant dialkylester de diacide aliphatique ;
- une charge renforçante ; et
- un système de réticulation.

2. Composition selon la revendication 1, dans laquelle le copolymère contient des unités éthylène qui représentent de 60% à 90%, de préférence de 70% à 85%, en moles des unités monomères du copolymère.

3. Composition selon l'une quelconque des revendications précédentes, dans laquelle le 1,3-diène de formule (I) est le myrcène, le β-farnésène ou un mélange de myrcène et de β-farnésène, de préférence le myrcène.

4. Composition selon l'une quelconque des revendications précédentes, dans laquelle le copolymère contient des unités du 1,3-diène de formule (I) qui représentent entre 1% et 50%, de préférence entre 1% et 30%, de préférence entre 5% et 30%, en moles des unités monomères du copolymère.

5. Composition selon l'une quelconque des revendications précédentes, dans laquelle le copolymère est un copolymère contenant en outre un deuxième 1,3-diène choisi parmi le 1,3-butadiène, l'isoprène ou leur mélange, de préférence le deuxième 1,3-diène est le 1,3-butadiène.

6. Composition selon l'une quelconque des revendications précédentes, dans laquelle le taux du copolymère est compris dans un domaine allant de 75 à 100 pce, de préférence encore de 90 à 100 pce, et dans laquelle l'élastomère diénique ayant un taux molaire d'unité diénique supérieur à 50% est présent à un taux compris dans un domaine allant de 0 à 25 pce, de préférence encore de 0 à 10 pce.

7. Composition selon l'une quelconque des revendications précédentes, dans laquelle l'élastomère diénique ayant un taux molaire d'unité diénique supérieur à 50% est choisi dans le groupe constitué par les polybutadiènes (BR), le caoutchouc naturel (NR), les polyisoprènes de synthèse (IR), les copolymères de 1,3-butadiène, les copolymères d'isoprène, et les mélanges de ces élastomères.

8. Composition de caoutchouc selon l'une quelconque des revendications précédentes, dans laquelle le taux du plastifiant dialkylester de diacide aliphatique est compris dans un domaine allant de 1 à 50 pce, de préférence de 2 à 40 pce et plus préférentiellement de 3 à 30 pce.

9. Composition de caoutchouc selon l'une quelconque des revendications précédentes, dans laquelle le plastifiant dialkylester de diacide aliphatique est un composé de formule $ROOC-(CH_2)_n-COOR$ dans lequel R est un alkyle linéaire ou branché et n représente un nombre entier de 4 à 20.

10. Composition de caoutchouc selon la revendication 9, dans laquelle le radical R est un alkyle comprenant de 4 à 20 atomes de carbone, de préférence de 6 à 12 atomes de carbone et plus préférentiellement de 6 à 10 atomes de carbone.

11. Composition de caoutchouc selon la revendication 9 ou 10, dans laquelle n représente un entier de 4 à 12, de préférence un entier de 6 à 10, et plus préférentiellement n est égal à 8.

12. Composition de caoutchouc selon l'une quelconque des revendications précédentes, dans laquelle le plastifiant dialkylester de diacide aliphatique est le di-2-éthylexyl sébacate.

13. Composition de caoutchouc selon l'une quelconque des revendications précédentes, dans laquelle la composition comprend un agent de couplage et dans laquelle la charge renforçante comprend plus de 50% en masse de silice par rapport à la masse totale de charge renforçante.

**14.** Composition de caoutchouc selon l'une quelconque des revendications précédentes, dans laquelle le taux de charge renforçante est compris dans un domaine allant de 30 à 200 pce, de préférence de 40 à 190 pce, de préférence de 50 à 180 pce.

**15.** Article en caoutchouc comprenant une composition selon l'une quelconque des revendications 1 à 14, ledit article étant de préférence choisi dans le groupe constitué par les bandages pneumatiques, les bandages non pneumatiques, les chenilles, les bandes de convoyage, les courroies et les articles antivibratoires, de préférence encore dans le groupe constitué par les bandages pneumatiques, les bandages non pneumatiques et les bandes de convoyage.

## Patentansprüche

**1.** Kautschukzusammensetzung auf Basis von mindestens:

- 50 bis 100 phe mindestens eines Copolymers, das Ethylen-Einheiten und Einheiten eines 1,3-Diens der Formel (I) enthält, wobei die Ethylen-Einheiten in dem Copolymer zwischen 50 und 95 Mol-% der Monomereinheiten des Copolymers ausmachen,

$$CH_2=CR-CH=CH_2 \qquad (I)$$

wobei das Symbol R für eine Kohlenwasserstoffkette mit 3 bis 20 Kohlenstoffatomen steht;
- 0 bis 50 phe mindestens eines Dienelastomers mit einem molaren Anteil an Dieneinheiten von mehr als 50 %;
- einem aliphatischen Disäuredialkylester-Weichmacher;
- einem verstärkenden Füllstoff; und
- einem Vernetzungssystem.

**2.** Zusammensetzung nach Anspruch 1, wobei das Copolymer Ethyleneinheiten enthält, die 60 bis 90 Mol-%, vorzugsweise 70 bis 85 Mol-%, der Monomereinheiten des Copolymers ausmachen.

**3.** Zusammensetzung nach einem der vorhergehenden Ansprüche, wobei es sich bei dem 1,3-Dien der Formel (I) um Myrcen, β-Farnesen oder eine Mischung von Myrcen und β-Farnesen, bevorzugt Myrcen, handelt.

**4.** Zusammensetzung nach einem der vorhergehenden Ansprüche, wobei das Copolymer Einheiten des 1,3-Diens der Formel (I) enthält, die zwischen 1 und 50 Mol-%, vorzugsweise zwischen 1 und 30 Mol-%, vorzugsweise zwischen 5 und 30 Mol-%, der Monomereinheiten des Copolymers ausmachen.

**5.** Zusammensetzung nach einem der vorhergehenden Ansprüche, wobei es sich bei dem Copolymer um ein Copolymer handelt, das ferner ein zweites 1,3-Dien enthält, das aus 1,3-Butadien, Isopren oder einer Mischung davon ausgewählt ist, wobei es sich bei dem zweiten 1,3-Dien vorzugsweise um 1,3-Butadien handelt.

**6.** Zusammensetzung nach einem der vorhergehenden Ansprüche, wobei der Anteil des Copolymers in einem Bereich von 75 bis 100 phe, weiter bevorzugt von 90 bis 100 phe, liegt und wobei das Dienelastomer mit einem molaren Anteil an Dieneinheiten von mehr als 50 % in einem Anteil in einem Bereich von 0 bis 25 phe, weiter bevorzugt von 0 bis 10 phe, vorliegt.

**7.** Zusammensetzung nach einem der vorhergehenden Ansprüche, wobei das Dienelastomer mit einem molaren Anteil an Dieneinheiten von mehr als 50 % aus der Gruppe bestehend aus Polybutadienen (BR), Naturkautschuk (NR), synthetischen Polyisoprenen (IR), 1,3-Butadien-Copolymeren, Isopren-Copolymeren und Mischungen dieser Elastomere ausgewählt ist.

**8.** Kautschukzusammensetzung nach einem der vorhergehenden Ansprüche, wobei der Gehalt des aliphatischen Disäuredialkylester-Weichmachers in einem Bereich von 1 bis 50 phe, vorzugsweise von 2 bis 40 phe und noch weiter bevorzugt von 3 bis 30 phe liegt.

**9.** Kautschukzusammensetzung nach einem der vorhergehenden Ansprüche, wobei es sich bei dem aliphatischen Disäuredialkylester-Weichmacher um eine Verbindung der Formel $ROOC-(CH_2)_n-COOR$ handelt, in der R ein lineares oder verzweigtes Alkyl ist und n für eine ganze Zahl von 4 bis 20 steht.

10. Kautschukzusammensetzung nach Anspruch 9, wobei der Rest R ein Alkyl mit 4 bis 20 Kohlenstoffatomen, vorzugsweise 6 bis 12 Kohlenstoffatomen und noch weiter bevorzugt 6 bis 10 Kohlenstoffatomen ist.

11. Kautschukzusammensetzung nach Anspruch 9 oder 10, wobei n für eine ganze Zahl von 4 bis 12 und vorzugsweise eine ganze Zahl von 6 bis 10 steht und noch weiter bevorzugt n gleich 8 ist.

12. Kautschukzusammensetzung nach einem der vorhergehenden Ansprüche, wobei es sich bei dem aliphatischen Disäuredialkylester-Weichmacher um Di-2-ethylhexylsebacat handelt.

13. Kautschukzusammensetzung nach einem der vorhergehenden Ansprüche, wobei die Zusammensetzung ein Kupplungsmittel umfasst und wobei der verstärkende Füllstoff mehr als 50 Massen-% Siliciumdioxid, bezogen auf das Gesamtgewicht des verstärkenden Füllstoffs, umfasst.

14. Kautschukzusammensetzung nach einem der vorhergehenden Ansprüche, wobei der Gehalt an verstärkendem Füllstoff in einem Bereich von 30 bis 200 phe, vorzugsweise von 40 bis 190 phe, bevorzugt von 50 bis 180 phe, liegt.

15. Kautschukgegenstand, umfassend eine Zusammensetzung nach einem der Ansprüche 1 bis 14, wobei der Gegenstand vorzugsweise aus der Gruppe bestehend aus Luftreifen, Vollreifen, Laufketten, Transportbändern, Riemen und schwingungsdämpfenden Gegenständen, weiter bevorzugt aus der Gruppe bestehend aus Luftreifen, Vollreifen und Transportbändern, ausgewählt ist.

## Claims

1. A rubber composition based on at least:

- 50 to 100 phr of at least one copolymer containing ethylene units and units of a 1,3-diene of formula (I), the ethylene units in the copolymer representing between 50 mol% and 95 mol% of the monomer units of the copolymer,

$$CH_2=CR-CH=CH_2 \qquad (I)$$

the symbol R representing a hydrocarbon-based chain containing from 3 to 20 carbon atoms;
- 0 to 50 phr of at least one diene elastomer having a molar content of diene units of greater than 50%;
- an aliphatic diacid dialkyl ester plasticizer;
- a reinforcing filler; and
- a crosslinking system.

2. The composition as claimed in claim 1, wherein the copolymer contains ethylene units which represent from 60 mol% to 90 mol%, preferably from 70 mol% to 85 mol%, of the monomer units of the copolymer.

3. The composition as claimed in either of the preceding claims, wherein the 1,3-diene of formula (I) is myrcene, β-farnesene or a mixture of myrcene and β-farnesene, preferably myrcene.

4. The composition as claimed in any one of the preceding claims, wherein the copolymer contains units of the 1,3-diene of formula (I) which represent between 1 mol% and 50 mol%, preferably between 1 mol% and 30 mol%, preferably between 5 mol% and 30 mol%, of the monomer units of the copolymer.

5. The composition as claimed in any one of the preceding claims, wherein the copolymer is a copolymer also containing a second 1,3-diene chosen from 1,3-butadiene, isoprene or a mixture thereof; preferably, the second 1,3-diene is 1,3-butadiene.

6. The composition as claimed in any one of the preceding claims, wherein the content of the copolymer is within a range extending from 75 to 100 phr, more preferably from 90 to 100 phr, and in which the diene elastomer with a molar content of diene units of greater than 50% is present in a content within a range extending from 0 to 25 phr, more preferably from 0 to 10 phr.

7. The composition as claimed in any one of the preceding claims, wherein the diene elastomer with a molar content of

diene units of greater than 50% is chosen from the group consisting of polybutadienes (BRs), natural rubber (NR), synthetic polyisoprenes (IRs), 1,3-butadiene copolymers, isoprene copolymers and mixtures of these elastomers.

**8.** The rubber composition as claimed in any one of the preceding claims, wherein the content of the aliphatic diacid dialkyl ester plasticizer is within a range from 1 to 50 phr, preferably from 2 to 40 phr and more preferentially from 3 to 30 phr.

**9.** The rubber composition as claimed in any one of the preceding claims, wherein the aliphatic diacid dialkyl ester plasticizer is a compound of formula $ROOC-(CH_2)_n-COOR$ in which R is a linear or branched alkyl and n represents an integer from 4 to 20.

**10.** The rubber composition as claimed in claim 9, wherein the radical R is an alkyl comprising from 4 to 20 carbon atoms, preferably from 6 to 12 carbon atoms and more preferentially from 6 to 10 carbon atoms.

**11.** The rubber composition as claimed in claim 9 or 10, wherein n represents an integer from 4 to 12, preferably an integer from 6 to 10, and more preferentially n is equal to 8.

**12.** The rubber composition as claimed in any one of the preceding claims, wherein the aliphatic diacid dialkyl ester plasticizer is di-2-ethylhexyl sebacate.

**13.** The rubber composition as claimed in any one of the preceding claims, wherein the composition comprises a coupling agent and in which the reinforcing filler comprises more than 50% by mass of silica relative to the total mass of reinforcing filler.

**14.** The rubber composition as claimed in any one of the preceding claims, wherein the content of reinforcing filler is within a range extending from 30 to 200 phr, preferably from 40 to 190 phr, preferably from 50 to 180 phr.

**15.** A rubber article comprising a composition as claimed in any one of claims 1 to 14, said article preferably being chosen from the group consisting of pneumatic tires, non-pneumatic tires, caterpillar tracks, conveyor belts, belts and anti-vibratory articles, more preferably from the group consisting of pneumatic tires, non-pneumatic tires and conveyor belts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2014114607 A1
- WO 2021053296 A1
- WO 2007054224 A
- WO 2007054223 A
- WO 2017093654 A1
- WO 2018020122 A1
- WO 9736724 A2
- WO 9916600 A1
- WO 03016215 A1
- WO 03016387 A1
- WO 0210269 A2
- WO 9736724 A
- WO 9916600 A
- EP 0501227 A
- EP 0735088 A
- EP 0810258 A
- WO 0005300 A
- WO 0005301 A

### Littérature non-brevet citée dans la description

- **R. MILDENBERG** ; **M. ZANDER** ; **G. COLLIN**. *Hydrocarbon Resins*, 1997, ISSN 3-527-28617-9
- **S. GEORGES et al.** *Polymer*, 2014, vol. 55, 3869-3878
- **S.GEORGES** ; **M.BRIA** ; **P. ZINCK** ; **M. VISSEAUX**. *Polymer*, 2014, vol. 55, 3869-3878